# EUROPEAN PATENT APPLICATION

(11) **EP 4 769 757 A1**
(43) Date of publication of application: **01.07.2026**
(21) Application number: 25857297.3
(22) Date of filing: 13.08.2025
(51) Int. Cl.: H01M 50/35, H01M 50/383, H01M 50/342, H01M 10/04, H01M 50/30

(54) **BATTERY PACK FOR THERMAL PROPAGATION DELAY AND PREVENTION**

(30) Priority: 21.08.2024 KR 20240111964
(71) Applicant: LG Energy Solution, Ltd., Seoul 07335 (KR)
(72) Inventor: KANG, Jae Hyuk, Daejeon 34122 (KR)
(74) Representative: Plasseraud IP
(86) International application number: PCT/KR2025/012307
(87) International publication number: WO 2026/043208

(57) **Abstract**

A battery pack for delaying or preventing thermal propagation according to an embodiment of the present invention comprises: at least one battery module; a pack housing configured to accommodate the battery module(s); and a module gas venting cover coupled to each battery module to guide the discharge of gas generated therein.

A battery pack according to an embodiment of the present invention has the effect of delaying or preventing thermal propagation between modules.

## Description

### [TECHNICAL FIELD]

The present invention relates to a battery pack, and more specifically, to a battery pack capable of delaying or preventing thermal propagation from a specific module to an adjacent module within the pack.

### [BACKGROUND ART]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be formed by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When a plurality of battery cells are connected in series and/or in parallel to form a battery pack, it is general practice to first configure a battery module consisting of at least one battery cell, preferably a plurality of battery cells, and then construct a battery pack by using at least one such battery module together with other components. Here, a battery module refers to a unit composed of a plurality of battery cells connected in series and/or in parallel, while a battery pack refers to a structure in which a plurality of battery modules are interconnected in series and/or in parallel to enhance capacity and output.

Typically, a battery pack has a structure in which a plurality of battery modules are accommodated within a pack housing, and, in order to maintain structural stability, the plurality of battery modules or battery module assemblies may be arranged on the same plane.

In such battery packs, when thermal runaway occurs in a specific module, thermal propagation may occur to adjacent modules, thereby causing the adjacent modules to also undergo thermal runaway.

### [SUMMARY OF THE INVENTION]

### [TECHNICAL PROBLEM]

It is an object of the present invention to provide a battery pack capable of delaying or preventing thermal propagation between modules.

### [SOLUTION TO THE PROBLEM]

A battery pack for delaying or preventing thermal propagation according to an embodiment of the present invention comprises: at least one battery module; a pack housing configured to accommodate the battery module(s); and a module gas venting cover coupled to each battery module to guide the discharge of gas generated therein.

Furthermore, the module gas venting cover includes a top plate disposed above the battery module, and a top plate connecting portion that connects an upper portion of the battery module to an edge of the top plate, thereby guiding gas from the battery module toward one edge of the top plate.

Furthermore, the module gas venting cover includes a flange portion bent at a lower end of the top plate connecting portion, the flange portion being coupled to the battery module.

Furthermore, the battery pack further includes a side channel disposed on one side of the pack housing and having a gas passage formed therein, the side channel discharging the gas released from the module gas venting cover to the outside.

In addition, the module gas venting cover further includes a side plate that extends downward from one edge of the top plate.

Furthermore, the side plate includes an opening.

Moreover, an opening is formed on one side of the pack housing, the opening being in communication with the opening of the side plate.

The battery pack further includes a gas venting rupture block disposed to cover the opening of the side plate.

Additionally, the gas venting rupture block is configured to rupture when a predetermined pressure is exceeded.

In addition, the module gas venting cover further includes a side plate connecting portion extending from both edges of the side plate to an end plate disposed on one side of the battery module.

Furthermore, the battery module comprises: a plurality of battery cells; and a module case accommodating the battery cells and including an upper plate with a vent hole formed therein, wherein a top plate is disposed spaced apart above the upper plate.

The battery pack further includes a side channel disposed on one side of the pack housing and having a gas passage formed therein, the side channel discharging gas released from the module gas venting cover to the outside.

Furthermore, the side channel extends along one side of the pack housing.

In addition, an inlet is formed on one side of the side channel, through which gas discharged from the module gas venting cover is introduced.

Additionally, the side channel further includes a partition wall extending in the longitudinal direction at its middle portion.

The side channel also includes a flame-retardant mesh disposed at its end.

Furthermore, a plurality of battery modules are disposed on left and right sides of the pack housing, and side channels are respectively disposed on both sides of the pack housing.

### [ADVANTAGEOUS EFFECTS OF THE INVENTION]

A battery pack according to an embodiment of the present invention has the effect of delaying or preventing thermal propagation between modules.

### [BRIEF DESCRIPTION OF DRAWINGS]

FIG. 1 is a perspective view of a battery pack according to an embodiment of the present invention.
FIG. 2 is an exploded perspective view of the battery pack according to an embodiment of the present invention.
FIG. 3 is a perspective view of a battery module in one embodiment of the present invention.
FIG. 4 is an exploded perspective view of the battery module in one embodiment of the present invention.
FIG. 5 is a perspective view of a battery cell in one embodiment of the present invention.
FIG. 6 is a perspective view of a terminal busbar in one embodiment of the present invention.
FIG. 7 is a perspective view of an insulating cover and an end plate in one embodiment of the present invention.
FIG. 8 is a perspective view of a battery module equipped with a module gas venting cover according to one embodiment of the present invention.
FIG. 9 is a perspective view of the module gas venting cover in one embodiment of the present invention.
FIG. 10 is a diagram illustrating the path of venting gas in the battery pack according to one embodiment of the present invention.
FIG. 11 is a detailed view of a portion of FIG. 10.
FIG. 12 is a partial cross-sectional view of FIG. 10.
FIG. 13 is a diagram illustrating a vehicle equipped with the battery pack according to one embodiment of the present invention.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

A battery pack (2000) according to the present invention will be described in detail with reference to the drawings.

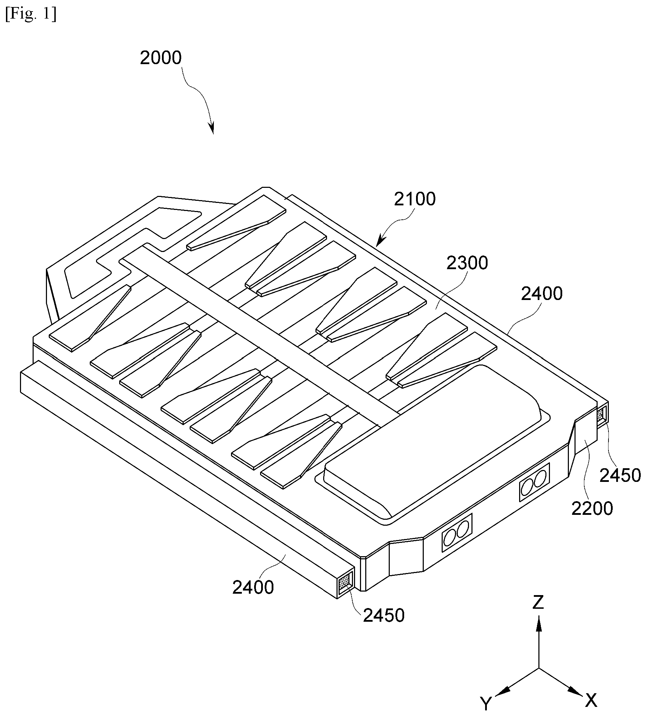

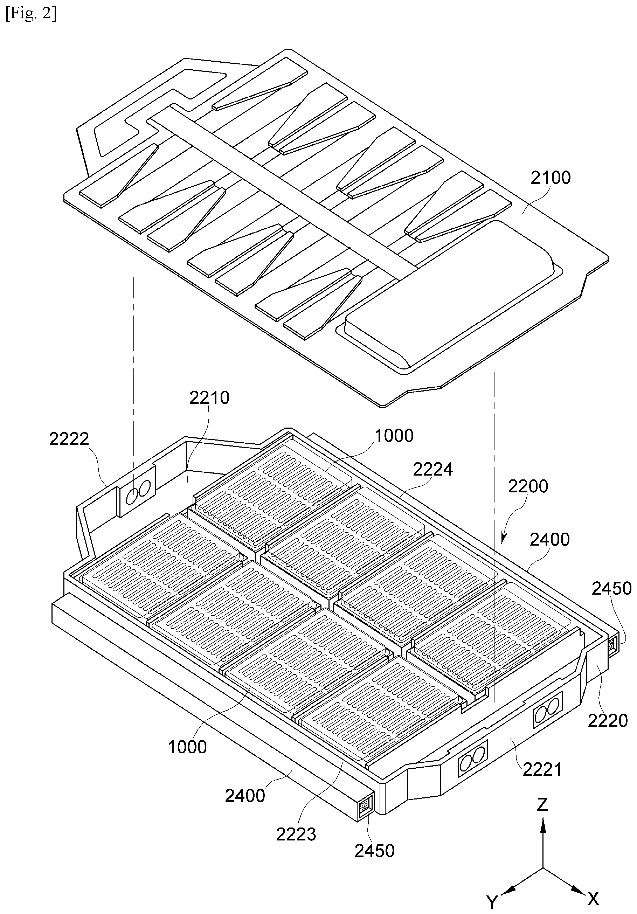

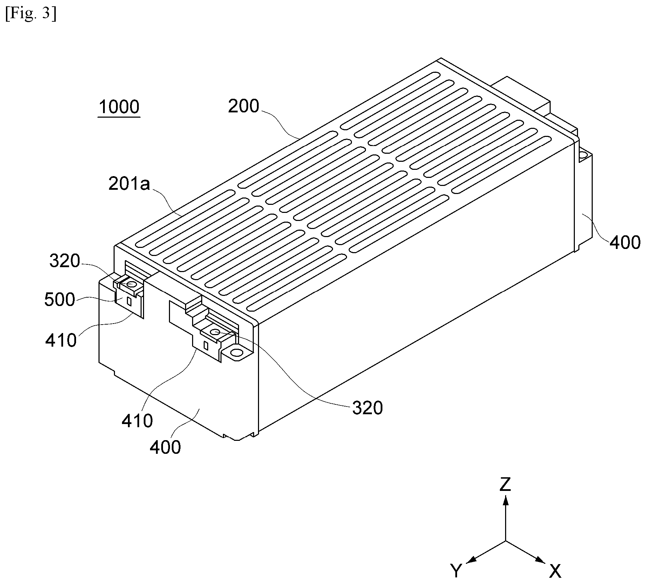

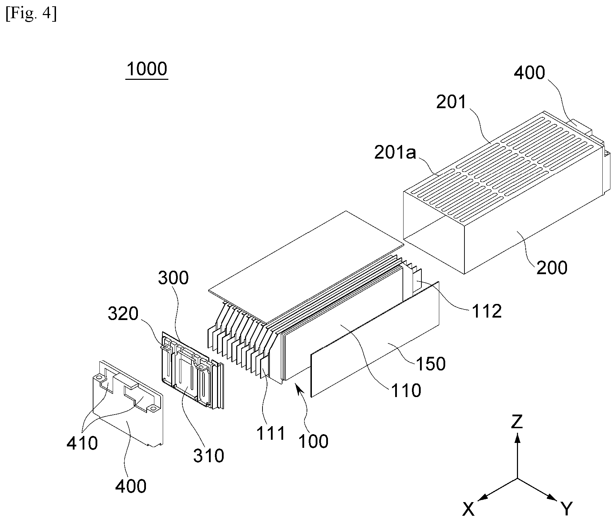

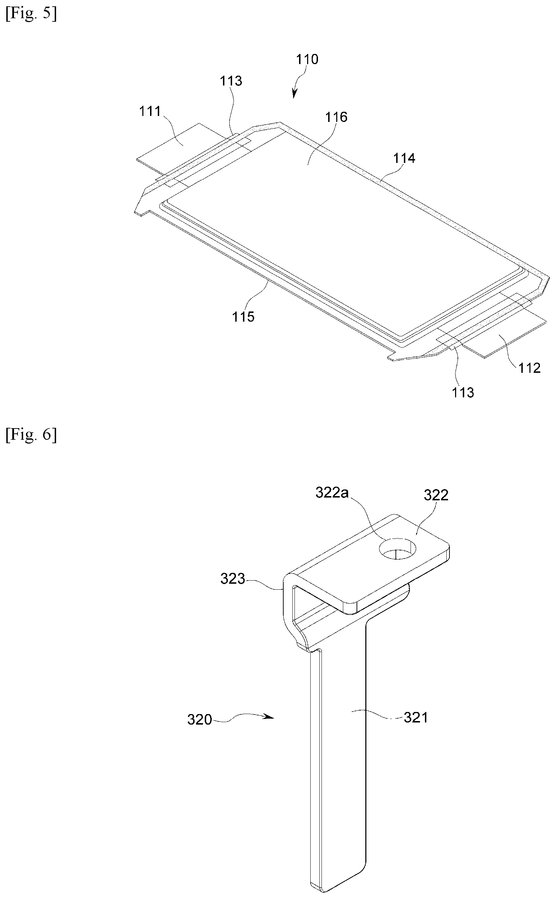

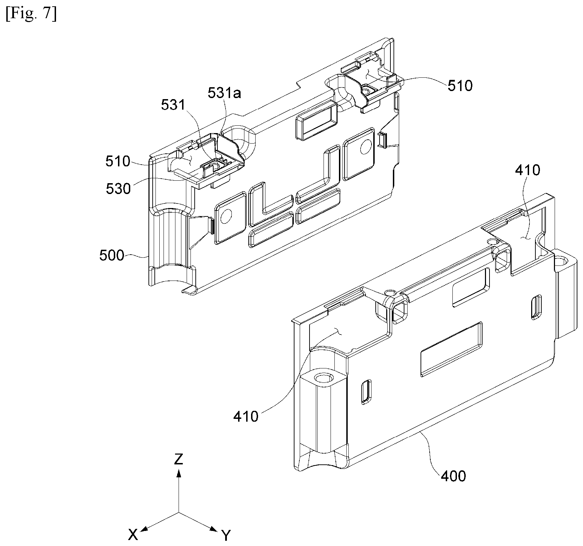

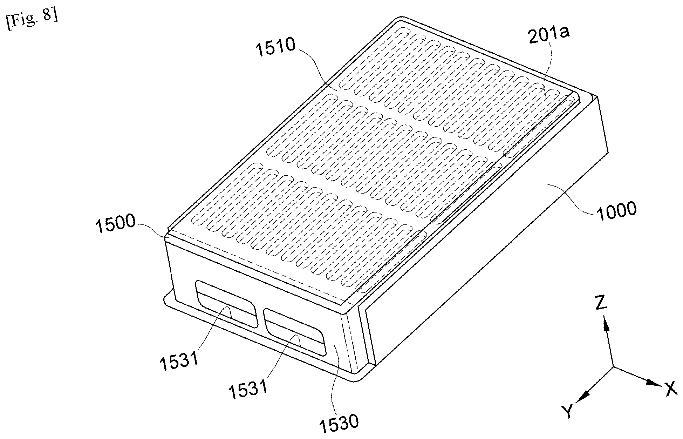

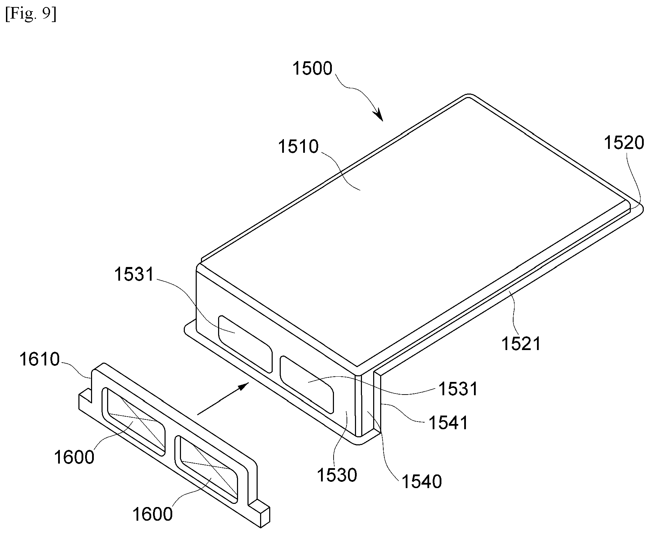

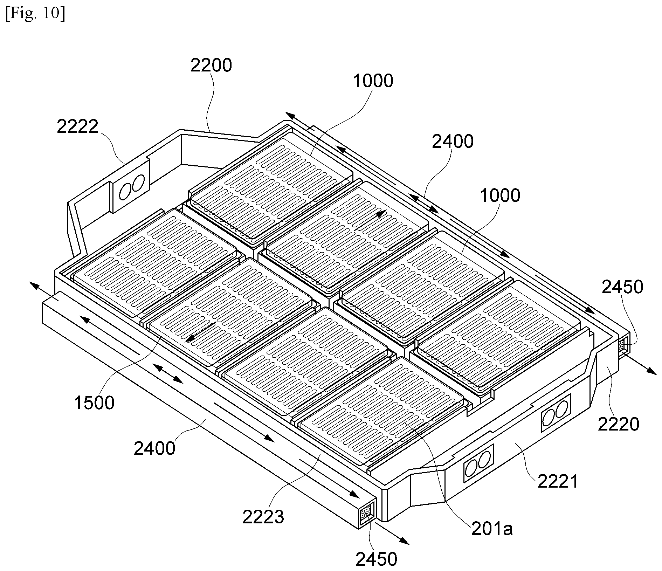

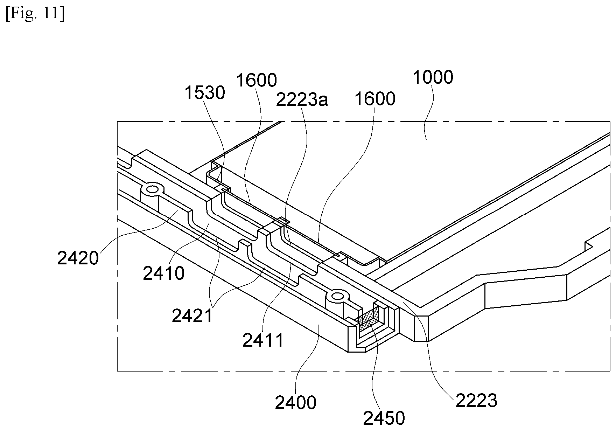

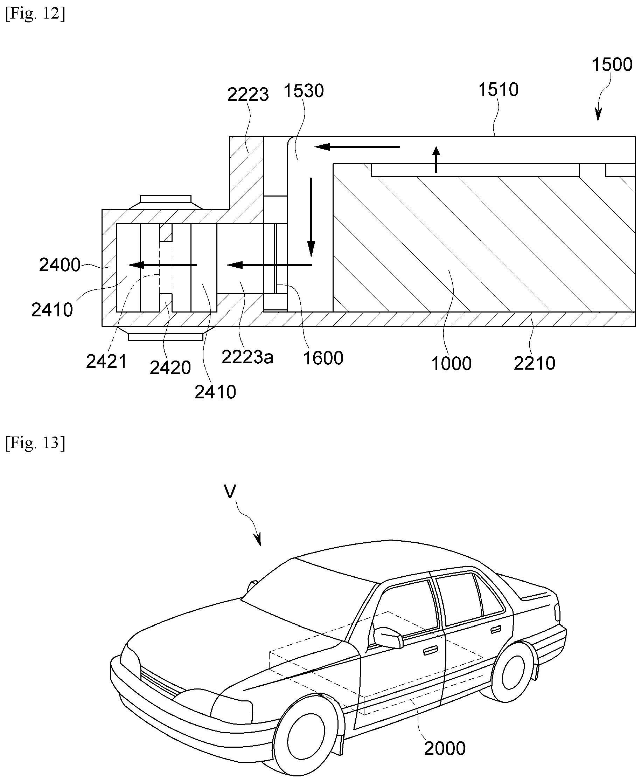

FIG. 1 is a perspective view of a battery pack according to an embodiment of the present invention; FIG. 2 is an exploded perspective view of the battery pack according to an embodiment of the present invention; FIG. 3 is a perspective view of a battery module in one embodiment of the present invention; FIG. 4 is an exploded perspective view of the battery module in one embodiment of the present invention; FIG. 5 is a perspective view of a battery cell in one embodiment of the present invention; FIG. 6 is a perspective view of a terminal busbar in one embodiment of the present invention; FIG. 7 is a perspective view of an insulating cover and an end plate in one embodiment of the present invention; FIG. 8 is a perspective view of a battery module equipped with a module gas venting cover according to one embodiment of the present invention; FIG. 9 is a perspective view of the module gas venting cover in one embodiment of the present invention; FIG. 10 is a diagram illustrating the path of venting gas in the battery pack according to one embodiment of the present invention; FIG. 11 is a detailed view of a portion of FIG. 10; FIG. 12 is a partial cross-sectional view of FIG. 10; and FIG. 13 is a diagram illustrating a vehicle equipped with the battery pack according to one embodiment of the present invention.

A battery pack (2000) according to one embodiment of the present invention may comprise at least one battery module (1000) and a pack housing (2100) configured to accommodate the battery module(s) (1000).

The pack housing (2100) may accommodate a plurality of battery modules (1000) and, as shown in FIG. 1, may include a lower housing (2200) and a pack lid (2300) coupled to an upper side of the lower housing (2200).

The lower housing (2200) may comprise a bottom portion (2210) and a side portion (2220). The bottom portion (2210) may extend in the horizontal direction to form the bottom of the lower housing (2200). In the present embodiment, the bottom portion (2210) may include a base plate formed as a horizontally extending plate, which may be made of a metal material, but is not limited thereto.

The side portion (2220) of the lower housing (2200) forms the sides of the lower housing (2200) and may be formed along the circumferential edge of the bottom portion (2210). The side portion (2220) may include a left side portion (2223) forming the left side of the lower housing (2200), and a right side portion (2224) forming the right side of the lower housing (2200), a front portion (2221) forming the front of the lower housing (2200) in the X-axis direction, and a rear portion (2222) forming the rear of the lower housing (2200).

Accordingly, in the side portion (2220), the left side portion (2223) and the right side portion (2224) may be positioned at the left and right edges of the bottom portion (2210), respectively, while the front portion (2221) and the rear portion (2222) may be positioned at the front and rear edges, respectively.

In this embodiment, the pack housing (2100) is illustrated as having a substantially rectangular box shape, but is not limited thereto and may be configured in various other shapes, including polygons.

Additionally, a pack lid (2300) may be placed on the upper portion of the pack housing (2100). The pack lid (2300) may be formed as a horizontally extending plate and may be coupled to an upper side of the lower housing (2200) by screws or the like. The pack lid (2300) can cover the internal space of the lower housing (2200), which is defined by the bottom portion (2210) and the side portion (2220), thereby covering the battery modules (1000) accommodated within. The pack lid (2300) may be connected to an upper end of the side portion (2220). Specifically, an edge of the pack lid (2300) may be joined to the upper ends of the left side portion (2223), right side portion (2224), front portion (2221), and rear portion (2222) by bolts, welding, or the like.

A gasket (not shown) may be installed between the lower housing (2200) and the pack lid (2300) for sealing.

Additionally, a partition may be disposed on the bottom portion (2210) between adjacent battery modules (1000).

In this embodiment, a plurality of battery modules (1000) may be disposed within the battery pack (2000). FIG. 3 is a perspective view illustrating one battery module (1000) having a module gas venting cover (1500) coupled thereto.

As illustrated in FIGS. 3 and 4, the battery module (1000) may comprise: a battery cell stack (100) in which a plurality of battery cells (110) are stacked in one direction; a module case (200) accommodating the battery cell stack (100); a busbar frame (300) disposed on a front and/or rear surface of the battery cell stack (100); an end plate (400) covering the front and rear surfaces of the battery cell stack (100); and busbars (310, 320) mounted on the busbar frame (300).

The battery cell stack (100) may be formed by stacking a plurality of battery cells (110) along one direction, and the plurality of battery cells (110) may be electrically connected. The direction in which the multiple battery cells (110) are stacked may be the X-axis direction (or -X-axis direction) in FIG. 4.

The direction from the front to the rear of the battery cell stack (100), or the opposite direction, can be defined as the longitudinal direction of the battery cell stack (100), which may correspond to the Y-axis direction in the drawing. In addition, the direction from the upper surface to the lower surface of the battery cell stack (100), or the opposite direction, can be defined as the width direction of the battery cell stack (100), which may correspond to the Z-axis direction in the drawing.

The longitudinal direction of the battery cell stack (100) may be substantially the same as the longitudinal direction of the battery cell (110). Electrode leads (111, 112) of the battery cells (110) may be located on the front and rear surfaces of the battery cell stack (100). The busbars (310, 320) of the battery module (1000) may be disposed close to the front and rear surfaces of the battery cell stack (100) to facilitate electrical connection with the electrode leads (111, 112).

The battery cell (110) can be provided as a pouch-type battery cell, which allows for maximizing the number of cells stacked per unit area. However, the battery cell (110) is not necessarily limited to a pouch type and may be provided in various other forms, such as prismatic or cylindrical.

A pouch-type battery cell (110) may include an electrode assembly (not shown) and a cell case (115) that accommodates the electrode assembly (see FIG. 5).

The cell case (115) of the battery cell (110) is for accommodating the electrode assembly and may be a pouch-type cell case. The cell case (115) includes a lower case and an upper case that covers the lower case, and the upper and lower cases may be integrally formed. Additionally, as shown in FIG. 5, the connecting portion of the upper and lower cases may be configured in a bent and folded structure. As illustrated, the upper case may completely cover the lower case, and a sealing portion (114) may be formed at the periphery.

Both the upper and lower cases can be formed of a laminate structure including an inner coating layer, a metal layer, and an outer coating layer. The inner coating layer is located inside the cell case (115) relative to the metal layer. Because it directly contacts the electrode assembly, it must have insulating properties and electrolyte resistance. Furthermore, for sealing from the outside, the sealed area where the inner layers are thermally bonded must have excellent thermal bonding strength. The metal layer is located between the inner and outer coating layers and corresponds to a barrier layer that prevents moisture or various gases from penetrating into the battery. A preferred material for the metal layer in contact with the inner coating layer may be a lightweight aluminum (Al) thin film with excellent formability. The outer coating layer is located on an outer side of the cell case (115) with respect to the metal layer. The outer coating layer may be formed of a heat-resistant polymer with excellent tensile strength, resistance to moisture permeability, and resistance to air permeability to protect the electrode assembly while ensuring heat resistance and chemical resistance. For example, nylon or polyethylene terephthalate may be used.

A receiving groove (116) can be formed in each of the upper and lower cases, and an electrode assembly can be accommodated in the receiving groove (116) of the upper and lower cases.

The electrode assembly housed in the cell case (115) may be selected from the group consisting of a jelly-roll type electrode assembly having a structure in which a separator is interposed between long sheet-shaped positive and negative electrodes and then wound; a stack type electrode assembly including unit cells having a structure in which rectangular positive and negative electrodes are stacked with a separator interposed therebetween; a stack-folding type electrode assembly in which the unit cells are wound by a long separator film; and a lamination-stack type electrode assembly in which the unit cells are stacked with a separator interposed therebetween and attached to each other.

Additionally, the electrode assembly may include two electrode tabs and two electrode leads (111, 112) each connected to the electrode tabs by a weld.

Of the two electrode leads (111, 112), one may be a positive electrode lead connected to a positive electrode tab, and the other may be a negative electrode lead connected to a negative electrode tab.

A lead film (113) may be attached to each of the electrode leads (111, 112). The lead film (113) coupled to the electrode leads (111, 112) is disposed between the electrode leads (111, 112) and the cell case (115) to prevent a short circuit from occurring therebetween and to improve the sealing force, thereby preventing leakage of the electrolyte.

The two electrode leads (111, 112) are shown as being arranged on each side of the electrode assembly, but may be arranged on only one side of the electrode assembly depending on the arrangement of the electrode tabs.

The module case (200) may accommodate the battery cell stack (100) and electrical components connected thereto in its internal space to protect them from an external physical impact.

The structure of the module case (200) may vary, and for example, the module case (200) may have a mono-frame structure. Here, the mono-frame may be in the form of a metal plate with an upper surface, a lower surface, and both sides integrated. The mono-frame can be manufactured by extrusion. As another example, the module case (200) may have a structure in which a U-shaped frame and an upper plate (201) are combined. In a structure combining a U-shaped frame and an upper plate (201), the module case (200) can be formed by coupling the upper plate (201) to the top of the U-shaped frame, which is a metal plate with an integrated or joined bottom and two side surfaces. Each frame or plate can be manufactured by press forming. In addition, the structure of the module case (200) may be provided as an L-shaped frame structure in addition to a mono-frame or U-shaped frame, and may be provided as various structures not described in the above-described examples.

The module case (200) may have an open structure along a longitudinal direction of the battery cell stack (100). A front surface and a rear surface of the battery cell stack (100) may not be covered by the module case (200). The electrode leads (111, 112) of the battery cell (110) may not be covered by the module case (200). The front and rear surfaces of the battery cell stack (100) may be covered by a busbar frame (300), an end plate (400), or busbars (310, 320), which will be described later, and thereby, the front and rear surfaces of the battery cell stack (100) may be protected from an external physical impact or the like.

A compression pad (150) may be disposed between one inner surface of the battery cell stack (100) and the module case (200).

The compression pad (150) can be placed so as to face the battery cell (110) at the outermost end of the battery cell stack (100).

Although not shown, a thermally conductive resin may be injected between an inner surface of the battery cell stack (100) and the module case (200), and a thermally conductive resin layer (not shown) may be formed between one of the inner surfaces of the battery cell stack (100) and the module case (200) by the injected thermally conductive resin. At this time, the thermally conductive resin layer may be positioned on the Z-axis of the battery cell stack (100), and the thermally conductive resin layer may be formed between the battery cell stack (100) and the bottom surface positioned on the -Z-axis of the module case (200).

The busbar frame (300) is disposed on one surface of the battery cell stack (100), and may cover the one surface of the battery cell stack (100) and guide a connection between the battery cell stack (100) and an external device. Although the busbar frame (300) is depicted as being on the front or rear of the battery cell stack (100), it is not limited thereto and may instead be positioned on the upper or lower side of the battery cell (110) or the battery cell stack (100). At least one of the busbars (310, 320) and a module connector may be mounted on the busbar frame (300). As illustrated in FIG. 4, one side of the busbar frame (300) is connected to one side (e.g., the front or rear) of the battery cell stack (100), and the other side of the busbar frame (300) can be connected to the busbars (310, 320).

The busbar frame (300) may include an electrically insulating material. The busbar frame (300) may prevent the busbars (310, 320) from contacting portions of the battery cells (110) other than the portions connected to the electrode leads (111, 112), thereby preventing an electrical short circuit.

The busbar frame (300) may be disposed on both sides (e.g., front and rear) of the battery cell stack (100).

The busbars (310, 320) may be mounted on one surface of the busbar frame (300) and may serve to electrically connect the battery cell stack (100) or the battery cells (110) to an external circuit. By being disposed between the battery cell stack (100) or the busbar frame (300) and the end plate (400), the busbars (310, 320) may be protected from external impacts, and deterioration of durability due to external moisture may be minimized.

The busbars (310, 320) may be electrically connected to the battery cell stack (100) via the electrode leads (111, 112) of the battery cells (110).

Specifically, the electrode leads (111, 112) of the battery cell (110) may be bent and connected to the busbars (310, 320) after passing through slits formed in the busbar frame (300). The battery cells (110) constituting the battery cell stack (100) may be connected in series or in parallel through the busbars (310, 320).

The busbars (310, 320) may comprise a terminal busbar (320) for electrically connecting one battery module (1000) with another battery module (1000). For connection to another battery module (1000), at least a portion of the terminal busbar (320) may be exposed outside the end plate (400), and the end plate (400) may be formed with a terminal opening (410) for this purpose.

Unlike the other busbars (310), the terminal busbar (320) may further comprise a protruding portion extending upward, the protruding portion being exposed to the outside of the battery module (1000) through the terminal opening (410). The terminal busbar (320) may be connected to another battery module (1000) or a Battery Disconnect Unit (BDU) via the protruding portion exposed through the terminal opening (410), thereby forming a high-voltage (HV) connection.

An end (the second portion (322)) of the terminal busbar (320) may be exposed through the opening (510) of the insulating cover (500) and the terminal opening (410) of the end plate (400).

As illustrated in FIG. 6, the terminal busbar (320) may comprise a first portion (321) connected to the electrode leads (111, 112) of the battery cell (110) and a second portion (322) exposed outside through the terminal opening (410). In addition, the terminal busbar (320) may further include a bending portion (323) formed between the first portion (321) and the second portion (322).

In the terminal busbar (320), the first portion (321) may be connected to the second portion (322) through the bending portion (323), and one surface of the first portion (321) and one surface of the second portion (322) may be perpendicular to each other. That is, by forming a bent portion (323) on the terminal busbar (320), the second portion (322) protrudes and is seated on the seating portion (530) of the insulating cover (500), and the second portion (322) may be electrically connected to a pack busbar (not shown). A coupling hole (322a) is formed in the second portion (322) constituting one end of the terminal busbar (320), and the second portion (322) of the terminal busbar (320) is fixed by a fixing pin (not shown) inserted into the coupling hole (322a).

In this embodiment, two terminal busbars (320) may be disposed on both sides of the busbar frame (300).

Of the two terminal busbars (320), one terminal busbar (320) may be a positive (+) terminal busbar (320), and the other may be a negative (-) terminal busbar (320).

The end plate (400) may protect the battery cell stack (100) and electrical components connected thereto from an external physical impact by covering an open surface of the module case (200). For this purpose, the end plate (400) may be manufactured from a material having a predetermined strength. For example, the end plate (400) may include a metal such as aluminum.

The end plate (400) may be coupled to the module case (200) while covering the busbar frame (300) or the busbar (310, 320) located on one surface of the battery cell stack (100). Each corner of the end plate (400) may be joined to a corresponding corner of the module case (200) by a method such as welding.

In addition, an insulating cover (500) for electrical insulation may be positioned between the end plate (400) and the busbar frame (300). The insulating cover (500) may include an electrically insulating material and may block the busbar (310, 320) from contacting the end plate (400). The insulating cover (500) may be positioned on an inner surface of the end plate (400) and may be in close contact with the inner surface of the end plate (400), but this is not necessarily required. The end plate (400) may be disposed on one side and the other side of the module case (200) to cover both sides of the battery cell stack (100).

The insulating cover (500) may include an opening (510) and a seating portion (530). An opening (510) may be disposed on each of upper sides of the insulating cover (500), and an end (the second portion (322)) of the terminal busbar (320) may be exposed through the opening (510).

Furthermore, a connector opening may be located between the openings (510) located on both sides of the insulating cover (500), and a module connector may be exposed to the outside through the connector opening.

The insulating cover (500) may be positioned on an inner surface of the end plate (400) and may be in close contact with the inner surface of the end plate (400), but this is not necessarily required.

As described above, an end (the second portion (322)) of the terminal busbar (320) may be exposed through the opening (510), and the exposed end (the second portion (322)) of the terminal busbar (320) may be seated on the seating portion (530). Accordingly, the seating portion (530) may be disposed adjacent to the opening (510) and may be disposed on an upper outer surface.

The second portion (322) of the terminal busbar (320) may be seated on an upper surface of the seating portion (530), and thus the upper surface of the seating portion (530) may form a seating surface. In addition, as illustrated in FIG. 7, the seating portion (530) may include a fixing member (531) for fixing the terminal busbar (320).

The fixing member (531) may fix the second portion (322) of the terminal busbar (320) and may include a fixing hole (531a).

A fixing pin (not shown) may be inserted into the fixing hole (531a). A fixing pin (not shown) inserted into a coupling hole (322a) formed in the second portion (322) of the terminal busbar (320) is coupled to and fixed in the fixing hole (531a), such that the second portion (322) of the terminal busbar (320) may be fixed to the insulating cover (500).

Accordingly, the second portion (322) of the terminal busbar (320) is seated on the seating portion (530) of the insulating cover (500), and the second portion (322) is seated on and comes into contact with the fixing member (531) disposed on the seating portion (530).

In addition, a terminal cover portion (not shown) covering an end (the second portion (322)) of the exposed terminal busbar (320) may be disposed on the insulating cover (500).

In one embodiment of the present invention, a module gas venting cover (1500) may be coupled to each battery module (1000).

FIG. 8 is a perspective view of a battery module (1000) having a module gas venting cover (1500) mounted thereon according to one embodiment of the present invention, and FIG. 9 is a perspective view of the module gas venting cover (1500) itself.

The module gas venting cover (1500) may comprise a top plate (1510), a top plate connecting portion (1520), a side plate (1530), and a side plate connecting portion (1540). The top plate (1510), the top plate connecting portion (1520), the side plate (1530), and the side plate connecting portion (1540) may be formed integrally.

In the module gas venting cover (1500), the top plate (1510) may be disposed at a predetermined distance from the upper plate (201) of the module case (200) and arranged parallel thereto. In this embodiment, the top plate (1510) may be formed as a substantially rectangular plate, and its length in the Y-axis direction may be greater than that of the upper plate (201).

The top plate connecting portion (1520) may extend from an edge of the top plate (1510) to the upper plate (201) of the module case (200), with an end thereof disposed on the upper plate (201). As shown, the top plate connecting portion (1520) may be arranged along three sides of the edge of the top plate (1510). The top plate connecting portion (1520) may be disposed along three sides of the edge of the top plate (1510), as illustrated. That is, the top plate connecting portion (1520) may be disposed on an edge of the top plate (1510) corresponding to both sides of the module case (200) and to the end plate (400) located at one end of the module case (200). A lower end of the top plate connecting portion (1520) may be bent to form a flange portion (1521), the flange portion extending parallel to the upper plate (201) of the module case (200). At the lower end of the top plate connecting portion (1520), the flange portion (1521) may be coupled to an edge of the upper plate (201) of the module case (200) by screws, welding, or the like. Accordingly, the space above the upper plate (201) of the module case (200) may be sealed in three directions by the top plate (1510) and the top plate connecting portion (1520), remaining open only toward the side plate (1530).

Thus, in the event of thermal runaway in the module (1000), high-temperature gas and particles discharged through the vent hole (201a) of the upper plate (201) may be guided by the top plate connecting portion (1520) and the top plate (1510) to move along the top plate (1510) toward the side plate (1530). That is, the top plate (1510) and the top plate connecting portion (1520) may serve to guide venting gas from the battery module (1000) toward the side plate (1530).

In the module gas venting cover (1500), the side plate (1530) may extend downward from one edge of the top plate (1510), be positioned to face the end plate (400) of the module case (200) at a predetermined distance, and be arranged parallel to the end plate (400).

One or more openings (1531) may be formed in the side plate (1530) as shown. Through the opening (1531), high-temperature gas and particles generated in the module (1000) may be discharged into the side channel (2400).

The side plate connecting portion (1540) may extend from both edges of the side plate (1530) to the end plate (400) of the module case (200), such that an end of the side plate connecting portion (1540) is disposed on the end plate (400). The side plate connecting portion (1540) may be disposed at both edges of the side plate (1530), as illustrated. That is, the side plate connecting portion (1540) may be disposed on both edges of the side plate (1530) corresponding to side edges of the end plate (400) located at one end of the module case (200) or on both sides thereof. An end of the side plate connecting portion (1540) may be bent outward to form a flange portion (1541), the flange portion extending parallel to the end plate (400) of the module case (200). At the end of the side plate connecting portion (1540), the flange portion (1541) may be coupled to an edge of the end plate (400) of the module case (200) by screws, welding, or the like. Accordingly, venting gas guided by the top plate (1510) may be prevented from passing to an adjacent module (1000) by the side plate connecting portion (1540), and may instead be discharged into the side channel (2400) through the opening (1531) of the side plate (1530).

As shown in FIG. 9, a gas venting rupture block (1600) may be disposed on the side plate (1530).

The gas venting rupture block (1600) may be disposed on one surface of the side plate (1530) to cover the opening (1531). As illustrated, the gas venting rupture block (1600) may be disposed on an outer surface of the side plate (1530).

By disposing the gas venting rupture block (1600) on one surface of the side plate (1530), the opening (1531) may remain closed under normal conditions. During thermal runaway, when venting gas pressure increases, the gas venting rupture block (1600) may rupture, thereby opening the opening (1531) and allowing high-temperature gas and particles to flow into the side channel (2400).

The material of the gas venting rupture block (1600) is not particularly limited, provided that it can rupture under a predetermined pressure, and may include sheets, synthetic resins, films, or metals. In another example, the gas venting rupture block (1600) may be configured to melt by the high-temperature venting gas, thereby opening the opening (1531).

A gas venting rupture block (1600) may be disposed in each of the two openings (1531), as illustrated. The gas venting rupture block (1600) may be mounted on a block frame (1610) disposed on one side of the side plate (1530), and may be positioned between the side plate (1530) of the module gas venting cover (1500) and the side portions (2223, 2224) of the lower housing (2200).

In this embodiment, side channels (2400) may be disposed on both side portions (2223, 2224) of the battery pack (2000). The side channel (2400) may be formed as a hollow side beam and may be disposed on the left side portion (2223) and the right side portion (2224) of the battery pack (2000), respectively.

The side channel (2400) may extend along the side portions (2223, 2224) of the battery pack (2000), and a passage (2410) extending in one direction (X-axis or -X-axis direction) may be formed inside the side channel (2400).

An inlet (2411) for introducing venting gas may be formed on a sidewall of the side channel (2400) adjacent to the left side portion (2223) or the right side portion (2224) of the battery pack (2000). The inlet (2411) of the side channel (2400) may be in communication with the opening (2223a) of the left side portion (2223) or the opening (2223a) of the right side portion (2224), and may further be in communication with the opening (1531) of the module gas venting cover (1500).

An intermediate wall (2420) may be placed inside the side channel (2400). The intermediate wall (2420) may extend along the longitudinal direction of the side channel (2400), thereby dividing the internal space of the side channel (2400) into two sections. The passage (2410) may be divided into two by the intermediate wall (2420), and the two parallel spaces may extend along the length of the side channel (2400).

An intermediate wall (2420) may be disposed longitudinally inside the side channel (2400) to improve the rigidity of the side channel (2400). An opening (2421) may be formed in the intermediate wall (2420) at a position facing the inlet (2411) so that venting gas and particles can move between the two spaces.

As shown in FIG. 11, a flame-retardant mesh (2450) may be disposed at both ends of the side channel (2400) to prevent flames from escaping from the pack (2000).

The flame-retardant mesh (2450) may be disposed to cover the openings at both ends of the side channel (2400). The flame-retardant mesh (2450) may be formed of a fire-resistant or flame-retardant material and may be configured to discharge venting gas while preventing flames from escaping outward.

For example, the flame-retardant mesh (2450) may be produced by weaving multifilament fibers such as polyester, nylon, or polypropylene into a base fabric, applying a flame-retardant vinyl chloride paste resin composition thereto, and processing it into a net-like shape.

Next, the discharge path of venting gas in the event of thermal runaway in a specific module (1000) of the battery pack (2000) having the aforementioned configuration will be described with reference to FIGS. 10 to 12.

When thermal runaway occurs in a specific module (1000), an upper space thereof is sealed in three directions, except toward the side plate, by the top plate connecting portion (1520) and the top plate (1510). Accordingly, high-temperature gas and particles discharged through the vent hole (201a) of the upper plate (201) may be prevented from propagating to an adjacent module (1000) and may instead be guided along the top plate (1510) toward the side plate (1530) in the Y-axis direction.

The venting gas guided by the top plate (1510) may be prevented from propagating to an adjacent module (1000) by the side plate connecting portion (1540) and may instead move into the space between the side plate (1530) and the end plate (400) of the module. The opening (1531) of the side plate (1530), blocked by the gas venting rupture block (1600), may be opened when the venting gas reaches a predetermined pressure, causing the rupture block (1600) to rupture.

Through the opened opening (1531), venting gas may flow into the side channel (2400) via the opening (2223a) of the sidewall portions (2223, 2224) and the inlet (2411) of the side channel. The venting gas may then move toward the front or rear of the pack (2000) along the passage (2410) and may ultimately be discharged to the outside through the flame-retardant mesh (2450).

Typically, when thermal runaway occurs in a specific module within a battery pack, thermal propagation to adjacent modules may cause the adjacent modules to also undergo thermal runaway. In an embodiment of the present invention, the configuration described above may delay or prevent thermal propagation between modules and may enable safe discharge of venting gas (and particles), thereby minimizing personal and material damage resulting from thermal runaway.

In the battery pack (2000) according to the present embodiment, battery modules (1000) may be housed on left and right sides of the pack housing (2100) relative to the center. Venting gas from the left battery module (1000) may be discharged through the side channel (2400) on the left sidewall portion (2223) of the lower housing (2200), and venting gas from the right battery module (1000) may be discharged through the side channel (2400) on the right sidewall portion (2224) of the lower housing (2200). That is, the left and right battery modules (1000) may guide venting gas in opposite directions.

The battery pack (2000) according to the present invention may further include various control and protection systems, such as a BMS (Battery Management System).

The battery module (1000) and the battery pack (2000) according to the present invention may be applied to various devices. Specifically, it can be applied to transportation means such as electric bicycles, electric vehicles (EVs), and hybrid vehicles, or to an Energy Storage System (ESS), but is not limited thereto and is applicable to any device that can use secondary batteries.

Meanwhile, in an embodiment of the present invention, although an example is shown in which a plurality of battery modules are accommodated inside the battery pack (2000), a plurality of battery cells (110) may instead be arranged inside the battery pack (2000). When a plurality of battery cells (110) are arranged directly inside the battery pack (2000) without a module case (200), the module gas venting cover (1500) may be configured to cover the battery cell stack (100) and may further comprise an additional side plate disposed opposite the side plate (1530). Additionally, the module gas venting cover (1500) may further comprise a pair of side plates disposed to face the outermost battery cells (110) of the battery cell stack (100). Therefore, in this case, four side plates (1530) may be disposed around the entire perimeter of the battery cell stack (100). Accordingly, venting gas may be discharged into the side channel (2400) through the opening (1531) of the side plate (1530).

FIG. 13 is a view illustrating an electric vehicle (V) provided with a battery pack (2000). In an electric vehicle (V), wheels are driven by a motor that receives power from a battery pack (2000), so that the electric vehicle may be operated.

Although the present invention has been described with reference to the preferred embodiments, it is not limited to the above-described embodiments, and various changes and modifications may be made by one of ordinary skill in the art to which the present invention pertains without departing from the spirit of the present invention.

### [INDUSTRIAL APPLICABILITY]

The present invention can provide a battery pack capable of delaying or preventing thermal propagation between modules.

## Claims

1. A battery pack, comprising:
one or more battery modules;
a pack housing accommodating the battery modules; and
a module gas venting cover coupled to the battery modules to guide the discharge of gas generated therefrom.

2. The battery pack of claim 1, wherein the module gas venting cover comprises:
a top plate spaced upward from the battery module; and
a top plate connecting portion connecting an upper portion of the battery module to an edge of the top plate;
wherein the cover is configured to induce gas
from the battery module to move toward one edge of the top plate.

3. The battery pack of claim 2, wherein
the module gas venting cover comprises a flange portion that is bent at a lower end of the top plate connecting portion and is coupled to the battery module.

4. The battery pack of claim 2, further comprising:
a side channel disposed on one side of the pack housing and having a gas passageway formed therein to discharge gas from the module gas venting cover to an outside.

5. The battery pack of claim 2, wherein
the module gas venting cover further comprises a side plate extending downward from one edge of the top plate.

6. The battery pack of claim 5, wherein
the side plate includes an opening.

7. The battery pack of claim 6, wherein
an opening is arranged on one side of the pack housing, and wherein
the opening of the pack housing is in communication with the opening of the side plate.

8. The battery pack of claim 6,
further comprising a gas venting rupture block arranged to cover the opening of the side plate.

9. The battery pack of claim 8, wherein
the gas venting rupture block is configured to rupture when a certain pressure is exceeded.

10. The battery pack of claim 5, wherein
the module gas venting cover further comprises a side plate connecting portion extending from both edges of the side plate to an end plate disposed on one side of the module.

11. The battery pack of claim 6, wherein
the battery module comprises a plurality of battery cells and a module case that accommodates the plurality of battery cells and includes an upper plate having a vent hole formed therein; and
wherein the top plate is disposed to be spaced upward from the upper plate.

12. The battery pack of claim 1, further comprising
a side channel disposed on one side of the pack housing and having a gas passageway formed therein to discharge gas from the module gas venting cover to an outside.

13. The battery pack of claim 12, wherein
the side channel extends along one side of the pack housing.

14. The battery pack of claim 13, wherein
an inlet is disposed on one side of the side channel for introducing gas discharged from the module gas venting cover.

15. The battery pack of claim 13, wherein
the side channel further comprises an intermediate wall extending longitudinally in a middle portion thereof.

16. The battery pack of claim 13, wherein
the side channel further comprises a flame-retardant mesh disposed at an end thereof.

17. The battery pack of claim 12, wherein
a plurality of the battery modules are arranged on the left and right sides of the pack housing; and
wherein the side channels are arranged on each of the two sides of the pack housing, respectively.
